# EUROPEAN PATENT APPLICATION

(11) **EP 2 159 733 A1**
(43) Date of publication of application: **03.03.2010**
(21) Application number: 08764153.6
(22) Date of filing: 17.06.2008
(51) Int. Cl.: G06F 21/24, H04N 7/173

(54) **NETWORK AV CONTENT PLAY TERMINAL, SERVER, AND SYSTEM**

(30) Priority: 20.06.2007 JP 2007162997
(71) Applicant: Panasonic Corporation, Kadoma-shi Osaka 571-8501 (JP)
(72) Inventor: TAKECHI, Hideaki, Osaka-shi, Osaka 540-6207 (JP); TAMANO, Hirokazu, Osaka-shi, Osaka 540-6207 (JP); SHIBATA, Kenichi, Osaka-shi, Osaka 540-6207 (JP)
(74) Representative: Grünecker, Kinkeldey, Stockmair & Schwanhäusser Anwaltssozietät
(86) International application number: PCT/JP2008/001558
(87) International publication number: WO 2008/155902

(57) **Abstract**

In a service of downloading contents whose contract is to be automatically renewed, an establishing of a synchronization between information about a period stored on the side of a terminal and information about a period to be renewed on the side of a server, causes a problem of load increase and others because a large amount of contents have to be synchronized at frequent intervals.

In consideration thereof, a method for contents viewing permission takes two types of automatic renewal and non-automatic renewal, and the type is described in a meta data transmitted to the terminal at the time of DL registration. In accordance with the meta data, when the type is of the automatic renewal, even if the license is already expired, the terminal makes a display of "automatic renewal" on a listing-display screen of an information display section with no conditions, at a point in time before a command comes from a user for playback and before the license is renewed in response thereto. And when the type is of the non-automatic renewal, an expiration date is checked, and the date or whether the date is expired or not is displayed on the listing-display screen.

## Description

### Technical Field

The present invention relates to a terminal, a server, and a system that enable video and audio contents to be downloaded through a network and played back.

### Background Art

With the development of the Internet, technologies for downloading and playing back contents such as movies and music are becoming commonplace. Many services are provided that allow contents to be downloaded from servers that distributes contents such as movies and music to PCs, audio-video (AV) equipment, mobile phones, and portable devices through a network.

By applying the Digital Rights Management (DRM) technology to such contents distribution services, contents rental systems that permit users to view and/or listen to (hereinafter abbreviated as "view") contents for a limited time only, have been implemented.

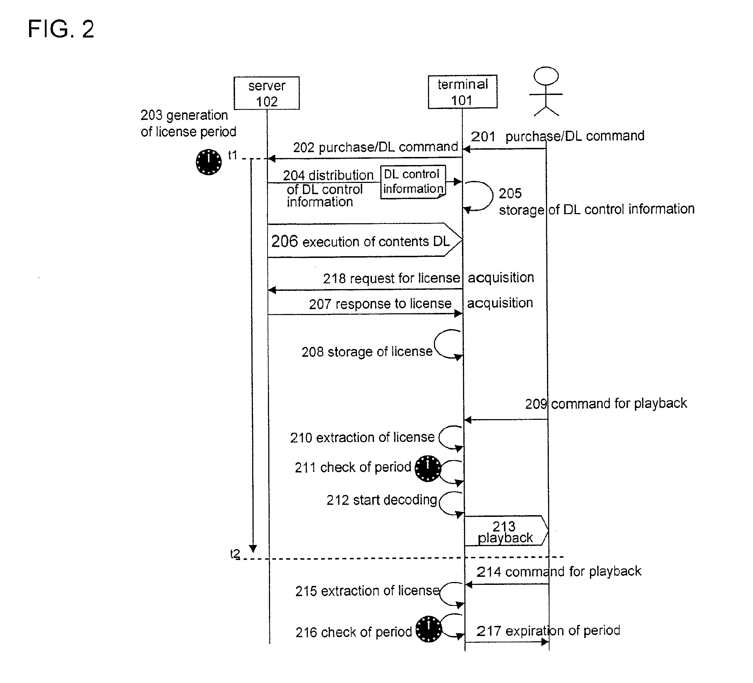

An exemplary operation sequence of such a system is shown in Figure 2. Operation of a first example of the conventional art will be described with respect to Figure 2.

A terminal 101 and a server 102 are interconnected through the Internet and can communicate with each other. In this configuration, a user can operate the terminal 101 to access the server 102 by using a Web browser or other communication application and send a contents purchase and download command 202. Upon receipt of the contents purchase and download command 202, the server 102 generates a term t1 to t2 during which the user is permitted to rent the contents and stores the term t1 to t2 in the server 102 at step 203.

The server 102 then distributes download(DL) control information to the terminal 101 as a response to the contents purchase and download command 202 at step 204. Here, the DL control information is information used for acquiring contents and a license for the contents and includes, for example, the URL of the contents and the ID of the license,.

Upon receipt of the DL control information, the terminal 101 stores the DL control information in the terminal 101 at step 205. The terminal 101 then downloads the contents according to the DL control information at step 206. The download is initiated by issuing a GET command of HTTP, for example, for the URL of the contents and is completed by acquiring and storing all of the contents in the terminal 101.

Upon completion of the download, the terminal 101 issues a license acquisition request to the server 102 at step 218. The server 102 distributes the license through a license acquisition response 207 in response to the license acquisition request 218. Here, the license is information for limiting the contents playback time period in which the contents are permitted to be played back and includes, for example, an encryption key for decrypting an encrypted contents and the expiration time of use of the encryption key.

Since the server 102 has generated the term t1 to t2 during which the contents are to be rented at step 203, the server 102 distributes the term t1 to t2 as playback expiration time information included in the license.

Upon receipt of the license, the terminal 101 stores the license in the terminal 101 at step 208. With the sequence described above, the download of the contents and acquisition of the license for the contents is completed.

Then, the user operates the terminal 101 to instruct the terminal 101 to play back the downloaded contents at step 209. The terminal 101 extracts the stored license at step 210, compares the information of the playback expiration periods t1 to t2 in the license with the current time at step 211 and, if the current time is within the playback term, starts decrypting the contents using the encryption key in the license at step 212. As a result of the sequence described above, contents playback 213 of the contents can be performed.

If the user instructs to play back the contents at step 214 after the expiration of the rental term, comparison at step 216 between the information of the playback expiration periods t1 to t2 in the license extracted at step 215 and the current time will show the expiration of the rental term. Accordingly, a message will be displayed that notifies the user of the expiration at step 217, without playing back the contents.

By the sequence described above, contents rental system that permits viewing the contents for a limited time, has been provided.

### Disclosure of the Invention

### Problems that the Invention is to Solve

With such a conventional example, however, various problems will be caused in a case of providing such a rental service of a type of automatically renewing a contents viewing period due to the continuation of a contract.

With the style of the contract of such an automatic renewal type, viewing permission is issued at the time of sign-up, with a limitation of period until the end of the month, for example, and when the end of the month comes, another viewing permission will be automatically issued with another limitation of period until the end of the next month, thereby repeatedly renewing the viewing permission unless the contract is cancelled. When a user explicitly goes through a process of cancellation via the server 102 or others, such a renewal is not made thereafter. Hereinafter, such contract making is referred to as automatic-renewal contract.

Assuming that the rental system of the conventional example described above is applied when a contract is such an automatic-renewal contract, and assuming that the period t2 is provisional at the end of any month with such an automatic-renewal contract, even if the viewing period is to be automatically renewed on the side of the server 102, such information is not reflected in terms of the license in the terminal 101. Therefore, as a result of verifying the information about the playback expiration periods t1 to t2 in the license extracted in step 215 against the current time in step 216, the determination will be made that the rental period is over, and thus a display will be made to notify the user that the license is expired without performing playback in step 217. The conventional example causes such a problem.

In order to get around the problem, a synchronization may be established between the information about the license in the server 102 and that in the terminal 101. However, this also causes various problems specifically considering high possibility that such a contract is for the provision of a free-view service where the user is free to view all contents, and the terminal carries therein a large number of contents. That is, there is inconvenience for the user's manual operation of information synchronization, because the user has to identify which contents is to be automatically renewed with which contract, among a large number of contents.

In order to get around such problems differently, there may be a method that a terminal automatically accesses a server, only for the automatic-renewal contract, when the period is going expired, thereby checking whether the viewing period is extended or not. With such a method, however, assuming that a large number of contents are stored in a large number of terminals, there are problems that the renewal load for the server becomes not negligible, and the server tends to be under the concentrated communications load of automatic renewal at the expiration date being the end of the month, for example.

In consideration thereof, if the provisional period t2 is divided for the purpose of splitting the load on the server, it means that various types of periods are displayed for each contents when the user checks the contents state, and thus there is problem that the user has a difficulty in understanding the situation.

Considering such various problems with the conventional contents distribution technology described above, an object of the present invention is to provide a terminal, a server, and a system that allow viewing by extending a period of viewing through correct renewal of the period in the terminal, without imposing an excessive load on the server and causing the concentration of load, even with a rental license of a type automatically renewing the viewing period on the side of the server.

### Means for solving the problems

The 1^{st} aspect of the present invention is a network AV contents playback terminal that is connected with a server on a network, acquires AV contents through the connection, acquires a license of the AV contents from the server for its own storage, and uses the AV contents for a fixed length of time based on the stored license, the terminal is characterized by comprising:
an interface output that displays a time range available for viewing of the AV contents based on the stored license; and
an interface input that accepts a command from a user for playing back the AV contents, wherein
a determination is made whether the license is of an automatic renewal type where a specific range of time and day available for use is automatically renewed on the server or of a non-automatic renewal type where no such renewal is automatically made, and
in accordance with a result of the determination, the time range available for viewing is displayed with a different manner.

The 2^{nd} aspect of the present invention is
the network AV contents playback terminal according to the 1^{st} aspect of the present invention, characterized by comprising:
an accumulation section, and
the AV contents are used after it is acquired and accumulated in the accumulation section.

The 3^{rd} aspect of the present invention is the network AV contents playback terminal according to the 2^{nd} aspect of the present invention, **characterized in that**
when the result of the determination shows that the license of the AV contents is of the automatic renewal type, even if information about a period in the stored license, shows that the period is already expired, a display of period expiration is not made but a display is made to indicate that the license is of the automatic renewal type, at a point in time before the license is renewed, and
when the result of the determination shows that the license of the AV contents is of the non-automatic renewal type, the information about the period in the stored license is displayed, and when the period is already expired, a display is made to indicate that the period is already expired.

The 4^{th} aspect of the present invention is the network AV contents playback terminal according to the 3^{rd} aspect of the present invention, **characterized in that**
the license is renewed when the command for playing back the AV contents is provided.

The 5^{th} aspect of the present invention is the network AV contents playback terminal according to the 3^{rd} aspect of the present invention, **characterized in that**
when the command for playing back the AV contents is provided, the information about the period in the license is checked, and when a result of the check shows that the period is not yet expired, the AV contents are played back, and
when the result of the check shows that the period is already expired, the license of the AV contents is acquired again from the server, and when the period is not yet expired by checking the information about the period in the license acquired again, the playback is performed.

The 6^{th} aspect of the present invention is the network AV contents playback terminal according to the 3^{rd} aspect of the present invention, **characterized in that**
when the command for playing back the AV contents is provided, the information about the period in the license is checked, and when a result of the check shows that the period is not yet expired, the AV contents are played back, and
when the result of the check shows that the period is already expired, the license of the AV contents is acquired again from the server, and when the acquisition results in a failure or when the period is already expired by checking the information about the period in the license acquired again, an operation screen is displayed for the user to offer a purchase again.

The 7^{th} aspect of the present invention is the network AV contents playback terminal according to the 3^{rd} aspect of the present invention, **characterized in that**
when the command for playing back the AV contents is provided, the information about the period found in the license is checked, and when a result of the check shows that the period is not yet expired, the AV contents is played back, and
when the result of the check shows that the period is already expired, and when the license of the AV contents is of the automatic renewal type, the license of the AV contents is acquired again from the server, and when the period is not yet expired by checking the information about the period in the license acquired again, the AV contents are played back.

The 8^{th} aspect of the present invention is the network AV contents playback terminal according to the 3^{rd} aspect of the present invention, **characterized in that**
when the license of the AV contents is of the automatic renewal type, the information about the period in the license is automatically checked, and when a result of the check shows that the period is already expired, the license of the AV contents is acquired again from the server while equalizing an acquisition interval in accordance with a certain schedule.

The 9^{th} aspect of the present invention is a network AV contents distribution server that distributes an AV contents through a connection established with a terminal on a network, **characterized in tha**t
the server issues a license of the AV contents to the terminal,
the license is at least two types, the one being of an automatic renewal type where a specific range of time and day available for use is automatically renewed on the server and the other being of a non-automatic renewal type where no such renewal is automatically made,
prior to the distribution of the AV contents, the server transmits to the terminal, a set of control information for use to acquire the AV contents or to use thereof, and
the control information includes type information about whether the license is of the automatic renewal type or the non-automatic renewal type.

The 10^{th} aspect of the present invention is a network AV contents distribution server that distributes an AV contents through a connection established with a terminal on a network, **characterized in that**
the server issues a license of the AV contents to the terminal,
the license is at least two types, the one being of an automatic renewal type where a specific range of time and day available for use is automatically renewed on the server and the other being of a non-automatic renewal type where no such renewal is automatically made, and
in response to a request coming from the terminal, the server makes a response of type information about whether the license is of the automatic renewal type or the non-automatic renewal type.

The 11^{th} aspect of the present invention is a network AV contents distribution system in which a server is connected with a terminal having an accumulation section, via a network, and
the server distributes an AV contents to the terminal, and issues a license of the AV contents to the terminal, and the terminal stores the issued license and uses the AV contents for a fixed length of time based on the stored license, **characterized in that**
the license is at least two types, the one being of an automatic renewal type where a specific range of time and day available for use is automatically renewed on the server and the other being of a non-automatic renewal type where no such renewal is automatically made,
prior to the distribution of the AV contents, the server transmits to the terminal, a set of control information for use to acquire the AV contents or to use thereof, and
the control information includes type information about whether the license is of the automatic renewal type or the non-automatic renewal type
the terminal is provided with an interface output that displays a time range available for viewing of the AV contents to a user based on the stored license, and an interface input that is used for the user to issue a command for playing back the AV contents,
the terminal determines whether the stored license is of the automatic renewal type or the non-automatic renewal type,
when a result of the determination shows that the license of the AV contents is of the automatic renewal type, irrespective of information about a period in the stored license, a display of period expiration is not made but a display is made to indicate that the license is of the automatic renewal type, and
when the result of the determination shows that the license of the AV contents is of the non-automatic renewal type, the information about the period in the stored license is displayed, and when the period is already expired, information telling that the period is already expired is displayed.

The 12^{th} aspect of the present invention is a terminal program using an AV contents in a terminal that is connected with a server on a network, acquires the AV contents through the connection, acquires a license of the AV contents from the server for its own storage, and uses the AV contents for a fixed length of time based on the stored license, the program that makes a computer operate as:
an operation input instrument which accepts a command from the user for playing back the AV contents;
a control information determination instrument which makes a determination whether the license is of an automatic renewal type where a specific range of time and day available for use is automatically renewed on the server or of a non-automatic renewal type where no such renewal is automatically made; and
an information display instrument which displays with different manner to the user, a time range available for viewing of the AV contents, based on the license, in accordance with a result of the determination.

The 13^{th} aspect of the present invention is a recording medium recorded with the program of the 12^{th} aspect of the present invention, and can be processed by a computer.

### Advantage of the Invention

According to the present invention, provided are a terminal, a server, and a system that allow viewing by extending a period of viewing through correct renewal of the period in the terminal, without imposing an excessive load on the server and causing a concentration of the load, even with a rental license of a type automatically renewing the viewing period on the side of the server.

### Brief Description of the Drawings

FIG. 1 shows the configuration of a system in an exemplary embodiment of the present invention.
FIG. 2 shows a communications sequence between a terminal and a server in a conventional example.
FIG. 3 shows an exemplary communications sequence between a terminal and a server in a rental service of an automatic renewal type in the embodiment of the present invention.
FIG. 4 shows an exemplary communications sequence between a terminal and a server in a rental service of a non-automatic renewal type in the embodiment of the present invention.
FIG. 5(a) shows an exemplary screen display of a contents list in the embodiment of the present invention, and FIG. 5(b) shows a modified example thereof.

### Explanation of codes

- 101: terminal
- 102: server
- 103: network IF
- 104: contents acquisition section
- 105: accumulation section
- 106: playback section
- 107: control information acquisition section
- 108: control information storage section
- 109: control information determination section
- 110: information display section
- 111: operation input section
- 112: router
- 113: contents distribution section
- 114: accumulation device
- 115: control information distribution section
- 116: network
- 117: LAN
- 118: router
- 119: information display
- 120: operation input
- 121: playback output terminal
- 201: purchase/DL command
- 202: contents purchase and download command
- 203: generation of license period
- 204: distribution of DL control information
- 205: step of storage of DL control information
- 206: execution of contents DL
- 207: response to license acquisition
- 208: step of storage of license
- 209: command for playback
- 210: step of extraction of license
- 211: step of checking of license period
- 212: step of starting contents decoding
- 213: playback of contents
- 214: command for contents playback
- 215: step of extraction of license
- 216: step of checking of license period
- 217: display of expiration of period
- 218: request for license acquisition
- 301: purchase/DL command
- 302: purchase/DL command
- 303: generation of license period
- 304: step of writing of license type
- 305: distribution of DL control information
- 306: execution of contents DL
- 307: license acquisition
- 308: command for listing-display
- 309: determination of license type
- 310: step of extraction of license
- 311: step of check of license period
- 312: listing-display
- 313: contents playback command
- 314: contents playback
- 315: period extension
- 316: contents list-display command
- 317: determination of license type
- 318: step of extraction of license
- 319: step of checking of licesense period
- 320: display of contents list
- 321: command for contents playback
- 322: acquisition of license
- 323: contents playback
- 324: step of license invalidation
- 325: command for contents list
- 326: determination of license type
- 327: step of extraction of license
- 328: step of checking of license period
- 329: display of contents list
- 330: command for contents playback
- 331: acquisition of license
- 322: display of license period expiration
- 401: purchase/DL command
- 402: purchase/DL command
- 403: step of generation of license period
- 404: step of writing of license type
- 405: distribution of DL control information
- 406: execution of contents DL
- 407: request for license acquisition
- 408: command for contents list
- 409: determination of license type
- 410: step of extraction of license
- 411: step of checking of license period
- 412: display of contents list
- 413: command for contents playback
- 414: contents playback
- 415: command for contents list
- 416: determination of license type
- 417: step of extraction of license
- 418: step of checking of license period
- 419: display of contents list
- 420: command for contents playback
- 421: request for license acquisition
- 422: display of license acquisition result
- 423: acquisition of page for re-purchase
- 424: display of page for re-purchase
- 501: entry for automatic renewal type contents
- 502: entry for automatic renewal type contents
- 503: entry for non-automatic renewal type contents
- 504: entry for non-automatic renewal type contents
- 505: entry for automatic renewal type contents

### Best Mode for Carrying Out the Invention

In the below, an embodiment of the present invention is described by referring to the accompanying drawings.

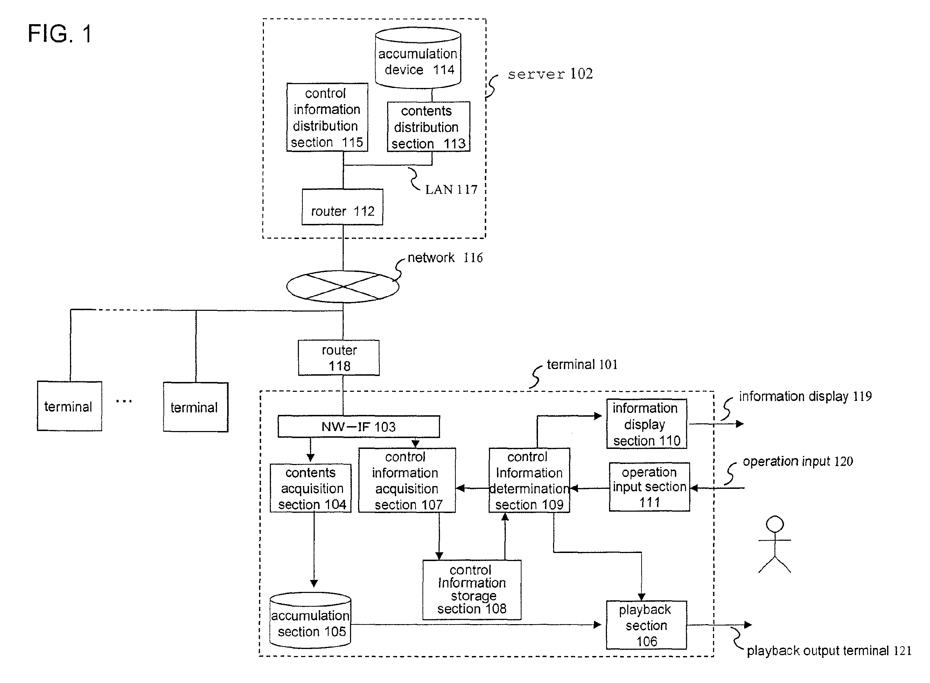

FIG. 1 is a diagram showing the configuration of a system in the embodiment of the present invention. A terminal 101 and a server 102 are connected together via a network 116. The terminal 101 is generally connected to the network 116 via a router 118 that routes IP communications. The network 116 may be also connected with a plurality of terminals each having a similar configuration to the terminal 101.

The terminal 101 is configured to include, but not limited to, a network IF 103, a contents acquisition section 104, an accumulation section 105, a playback section 106, a control information acquisition section 107, a control information storage section 108, a control information determination section 109, an information display section 110, and an operation input section 111.

The terminal 101 has a function of making an information display 119 to a user using the information display section 110, receiving an operation input 120 of the user from the operation input section 111, and downloading an AV contents file from the server 102 by using the network IF 103 and the contents acquisition section 104 in accordance with the operation input 120, for storing it in the accumulation section 105, and a function of playing back the AV contents file accumulated in the accumulation section 105 by the playback section 106, for outputting it to a playback output terminal 121.

Herein, the AV contents file is real-time data including video, audio, and others, and is exemplified by a file of MPEG2, MP3, and others. The playback output terminal 121 is exemplified by an AV terminal or others of HDMI, for example.

Moreover, the terminal 101 has a function of acquiring control information about the AV contents file from the server 102 for storage in the control information storage section 108, a function of making a determination by the control information determination section 109 based on the control information stored in the control information storage section 108, and a function of issuing permission for playback by the playback section 106 in accordance with the determination result, and displaying such information about a playback expiration period and YES or NO for playback, to the user, by using the information display section 110.

In the given embodiment, the control information includes download control information and a license.

The server 102 is configured to include, but not limited to, a contents distribution section 113, an accumulation device 114, a control information distribution section 115, a router 112, and a LAN 117. The contents distribution section 113 and the control information distribution section 115 are a server group where each server has a CPU and operates individually and is connected to each other by the LAN 117 disposed in the server site, thereby operating in a cooperative manner so that one download server function is realized as a whole.

The contents distribution section 113 is provided with the accumulation device 114, and is capable of downloading the AV contents file accumulated in the accumulation device 114 to the terminal 101 over the network 116.

The server of this embodiment is also provided with an HTML server and a database, which are components not shown, and is assumed as being providing of an HTML contents purchase page to users, management of the users accounts, management of contents viewing periods, and others.

As types of management of the contents viewing periods, the server 102 has a function of operating either license condition type, i.e., an automatic renewal type where a specific range of time and day available for use is automatically renewed on the server, or a non-automatic renewal type where no such automatic renewal is performed, and can offer a rental service under either type of the license condition, in accordance with a user's request and the individual contents.

Herein, the interface output of the present invention is the information display section 110, and the interface input is, for example, the operation input section 111.

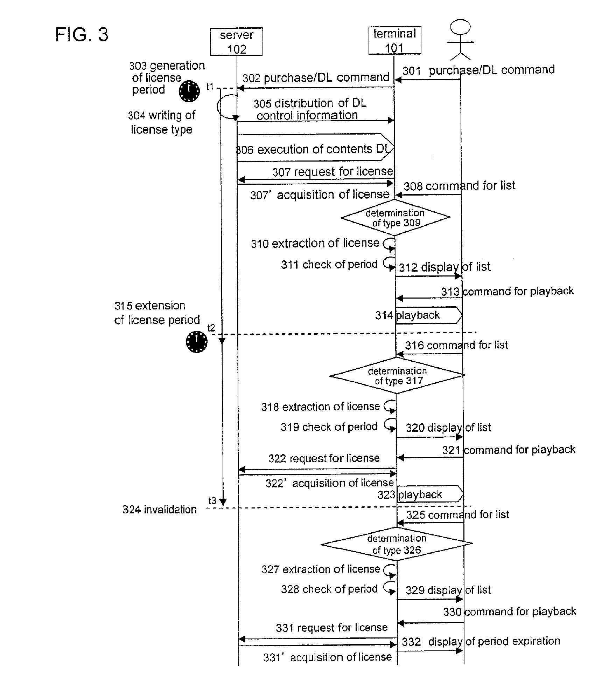

Next, in the embodiment, FIG. 3 shows the operation and communications sequence of a terminal and a server, when a user executes a contents rental service under the license of the automatic renewal type.

Referring to FIG. 3, the operation and the communications procedure are described in order. In FIG. 3, the terminal 101 and the server 102 are respectively of the same configurations as those of FIG. 1, and thus are respectively provided with the same reference numerals as those, and any component in charge of a general operation, e.g., network, is not shown in the drawing.

First of all, a user operates the terminal 101 by a purchase/DL command 301 for a connection to the server 102 using a Web browser and any other communications applications, and transmits a purchase/DL command 302 for an AV contents file, including a command for downloading the AV contents file with the rental requirements of the automatic renewal type condition.

After receiving the purchase and download command 302 for contents, in step 303, the server 102 generates a license to permit the use of the contents with respect to the user's account under the rental condition of the automatic renewal type. The procedure of generating the license includes, specifically, deciding a specific range of time and day t1 to t2 available for use, to write it in the license, and storing of the license in the control information distribution section 115 in the server.

Herein, assuming here is that the contract is by the month, t1 is the day of executing of contract, and t2 is at the end of the month, i.e., June 30. In this case, the control information distribution section 115 is stored with information indicating that the license is to be automatically renewed unless a command is issued to cancel the contract at the period t2. As the other information an ID of the terminal provided with permission, an ID of the AV contents file, an encryption key of the AV contents file, and others, are written in the license.

Next, in step 304, the server 102 writes information about a type, in the DL control information, whether the license is of the automatic renewal type or the non-automatic renewal type. Because the license generated in step 303 is of the automatic renewal type, information to be written is the license being of the automatic renewal type. Herein, the DL control information is information for use to acquire contents and a license of the contents, and is assumed as including the URL of the contents and an ID of the license in addition to the information about the type of the license.

Thereafter, as a response to the purchase and download command 302 for the contents, the server 102 distributes the DL control information to the terminal 101 in step 305.

Herein, the meaning of the writing of the information about the type to the DL control information, and of the distribution, are not restricted to a method of writing the information in a single file or a single response, and for example, a method such that the information for use to acquire contents and the information for use to acquire a license are distributed with separated files from the server to the terminal, can be applied, as long as any similar information is to be distributed by any similar sequence, and needless to say, the same effects are to be achieved.

After receiving the DL control information, the terminal 101 stores the DL control information in the control information storage section 108 in the terminal 101. Next, in step 306, the terminal 101 downloads the contents in accordance with the DL control information. Such contents download is performed by an issuing of an HTTP GET command to the URL of the contents described in the DL control information, and is completed when every portion of the contents is acquired and stored in the accumulation section 105 in the terminal 101.

With the completion of the contents download, in step 307, the terminal 101 transmits a license acquisition request to the server 102. The server 102 then searches the control information distribution section 115 to identify the license by verifying the ID of the terminal with permission and the ID of the AV contents file, and in step 307', as a response to the license acquisition request, performs license distribution. Upon reception of this, the terminal 101 stores the license in the terminal 101.

By such a sequence, the contents download and the acquisition of the license are completed.

Next the user operates the terminal 101 in step 308 to issue a command for displaying a list of the downloaded contents. As the function of displaying the list, in addition to the displaying of the titles of the contents, information about the playback expiration period for the contents rental service is displayed.

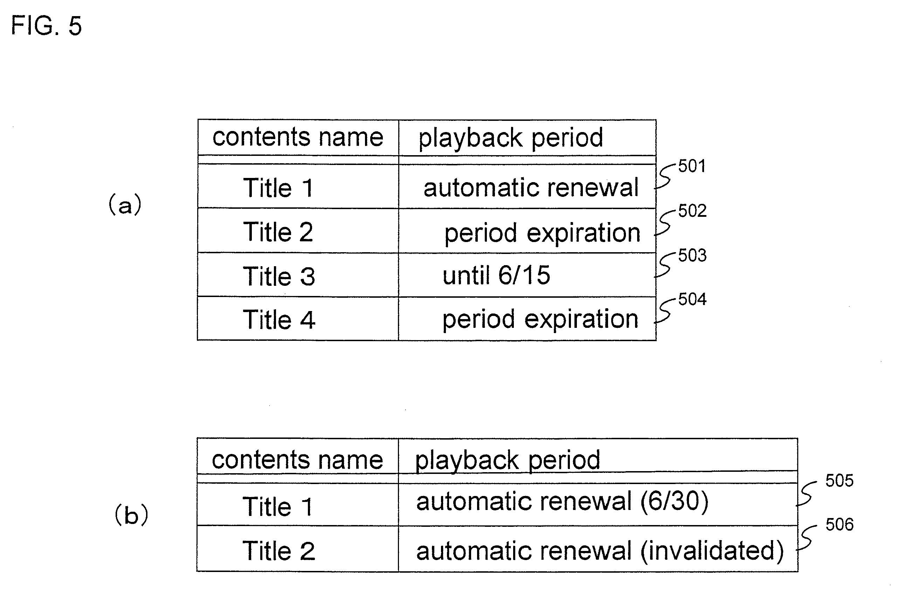

FIG. 5(a) shows a first exemplary display of a list of contents in the embodiment. The list of contents of FIG. 5(a) includes entries 501 to 504 provided for each contents, and the entries are each provided with a field for display of the contents name and that for a display of the playback expiration period. This is not restrictive, and any information generally required may be additionally included, e.g., description about the details, length of the contents, and YES or NO for copying, but these are omitted here.

After receiving a list command 308, in step 309, the terminal 101 makes a determination about the license type by reading the DL control information stored in the control information storage section 108 in the terminal, to the control information determination section 109. Because the DL control information written in step 304 is a license of the automatic renewal type, the determination result about the type will be the automatic renewal type.

Next, in step 310, the terminal 101 extracts the license, and in step 311, compares the period of the license (t1 to t2) with the current time to check.

Next, using the results in steps 309, 310, and 311, the terminal makes a listing-display 312. In this embodiment, the field of a playback expiration period for the rental service of contents of the automatic renewal type is displayed with a different manner from a case of the contents of the non-automatic renewal type. Then because the contents downloaded in step 306 is known at the time of step 308 as being of the automatic renewal type and further the period is not yet expired, the display will be simply made as "automatic renewal" as shown in the entry 501.

By looking at the field of a playback expiration period as such, the user is expected to know that the rental service is of the automatic renewal type and the service is still available, and the user thus issues a playback command 313. As a result, a playback 314 can be performed because the license is in the period not yet expired.

Thereafter, when t2 (June 30) comes with the lapse of a predetermined time, the server 102 subjects the license to a period extension 315 on the basis of the fact that the contract is not yet cancelled. The procedure for the period extension of the license includes renewal of a specific range of time and day available for use to t2 to t3, to write it in the license, and storing of the license in the control information distribution section 115 in the server 102. In this example, t3 will be July 31. At this time, the control information distribution section 115 is stored also with information about that the license is to be automatically renewed unless a command comes to cancel the contract at the period t3 also. At this time, information is not specifically synchronized for communications from the server 102 to the terminal 101.

With no synchronization information for communications as such, it becomes possible to avoid a problem of requiring communications beyond a NAT router and a firewall that often cause a problem with communications from a server to a household terminal, and a problem of contents deletion on the terminal side, power off on the terminal side, and communications blackout, for example.

Exemplified next is a case where the user issues a list-display command 316 at an arbitrary timing in the next month, namely July. Upon reception of the list command 316, in step 317, the terminal 101 reads the DL control information stored in the control information storage section 108 in the terminal 101, to the control information determination section 109, thereby making a license type determination. Because the DL control information written in step 304 is the license being of the automatic renewal type, the determination result about the type will be the automatic renewal type.

Next, in step 318, the terminal 101 extracts the license, and in step 319, compares the period of the license (t1 to t2) with the current time to check. Next, using the results in steps 316, 317, and 318, the terminal 101 makes a listing-display 320. In this example, the terminal 101 can know that the current time is already after t2 using a clock provided therein, but because the determination result in step 317 is the automatic renewal type, determines that there is a possibility of the contract yet being continued. Therefore, the terminal does not make a display of period expiration, but simply makes a display of "automatic renewal" as shown in the entry 501.

By looking at the field of a playback expiration period as such, the user is expected to know that the rental service is of the automatic renewal type, and the service is still available, and the user issues a playback command 321.

Because the current time is already after t2, and it means that no playback is allowed using the license in storage, at this time, the terminal 101 makes a request 322 for acquiring the license again to the server 102 for the first time. As a result, in step 322', the license whose period is renewed to t2 to t3 is acquired and stored in the terminal 101, thereby being able to perform a playback 323 in accordance with the period.

Exemplified next is a case that, the user asks for a cancellation of the contract during July, and t3 (July 31) comes with the lapse of another length of time. In this case, the server 102 makes an invalidation 324 about the license based on the fact that the contract is now cancelled. Also at this time, information is not specifically synchronized for communications from the server 102 to the terminal 101.

Exemplified next is a case that the user issues a list-display command 325 at an arbitrary timing after the next month, namely August or thereafter. Upon reception of the list command 325, in step 326, the terminal 101 reads the DL control information stored in the control information storage section 108 in the terminal 101, to the control information determination section 109, thereby making a license type determination. Because the DL control information written in step 304 is the license being of the automatic renewal type, the determination result about the type will be the automatic renewal type.

Next, in step 327, the terminal 101 extracts the license, and in step 328, checks the period of the license (t2 to t3). Next, using the results in steps 326, 327, and 328, the terminal 101 makes a listing-display 329. In this example, the terminal 101 can know that the current time is already after t3 using the clock provided therein, but because the determination result in step 326 is the automatic renewal type, determines that there is a possibility of the contract yet being continued. Therefore, the terminal 101 does not make a display of period expiration, but simply makes a display of "automatic renewal" as shown in the entry 501. By looking at the field of a playback expiration period as such, the user is expected to know that the rental service is of the automatic renewal type, and the service is still available, and the user thus issues a playback command 330.

Because the current time is already after t3, and it means that no playback is allowed using the license in storage, at this time, the terminal 101 makes a request 331 for acquiring the license again to the server 102 for the first time. As a result, in step 331, the terminal 101 gets a response 331' telling that the period is already expired and makes the license in the terminal 101 invalid. As the terminal 101 can not play back the contents, to make a display 332 of "period expiration" as shown in the entry 502 to tell the user that the license is now invalid.

Thereafter, when a request comes for a listing-display of this contents, a display of period expiration is made as shown in the entry 502. With such a sequence, the contents rental system that allows viewing under the condition of the automatic renewal month by month, can be implemented.

With such a system, no complicated display is made about periods related to every-month renewal, and the period available for viewing is displayed simply as "automatic renewal" so that the user can easily make a selection of contents.

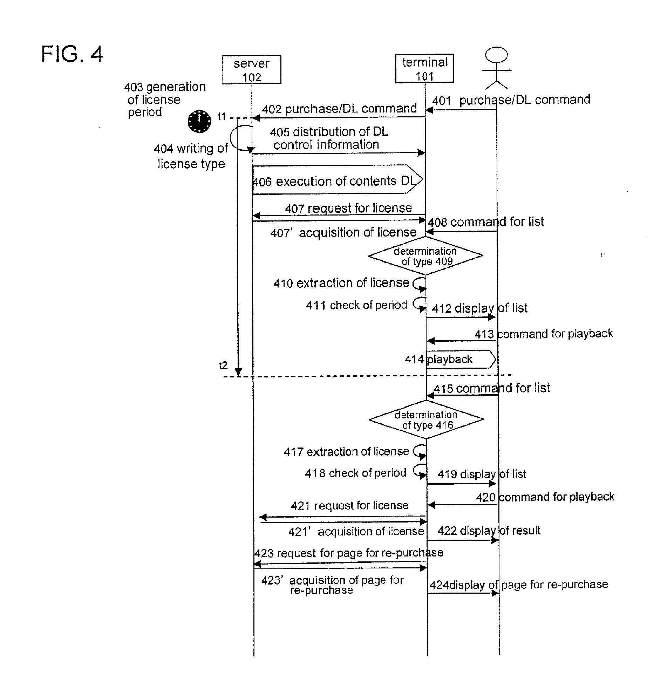

Next, FIG. 4 shows the operations and communications of a terminal and a server in case that a user makes a contents rental service with the license of a non-automatic renewal type. Referring to FIG. 4, the operation and the communications procedure are described below in order. In FIG. 4, the terminal 101 and the server 102 are respectively of the same configurations as those of FIG. 1, and thus are respectively provided with the same reference numerals as those, and any component in charge of a general operation, e.g., network, is not shown in the drawing.

First of all, a user operates the terminal 101 by a purchase/DL command 401 for a connection to the server 102 using a Web browser and any other communications applications, and transmits a purchase/DL command 402 for an AV contents file, including a command for downloading the AV contents file with the rental requirements of the non-automatic renewal type condition.

After receiving the purchase and download command 402 for contents, in step 403, the server 102 generates a license to permit the use of the contents with respect to the user's account under the rental condition of the non-automatic renewal type. The procedure of generating the license includes, specifically, deciding a specific range of time and day t1 to t2 available for use, to write it in the license, and storing of the license in the control information distribution section 115 in the server. Assuming here is that the contract is made on a period basis, t1 is the day of executing of contract, and t2 is June 15. In this case, the control information distribution section 115 is stored with such information that the license is to be invalid at t2.

Next, in step 404, the server 102 writes information about a type, in the DL control information, whether the license is of the automatic renewal type or the non-automatic renewal type. Because the license generated in step 403 is of the non-automatic renewal type, information to be written is the license being of the non-automatic renewal type. Thereafter, as a response to the purchase and download command 402 for the contents, the server 102 distributes the DL control information to the terminal 101 in step 405.

After receiving the DL control information, the terminal 101 stores the DL control information in the control information storage section 108 in the terminal 101. Next, in step 406, the terminal 101 downloads the contents in accordance with the DL control information. Such contents download is performed by an issuing of an HTTP GET command to the URL of the contents described in the DL control information, and is completed when every portion of the contents is acquired and stored in the accumulation section 105 in the terminal 101.

With the completion of the contents download, in step 407, the terminal 101 transmits a license acquisition request to the server 102. The server 102 then searches the control information distribution section 115 to identify the license by verifying the ID of the terminal with permission and the ID of the AV contents file, and as a response 407 to the license acquisition request, performs license distribution. Upon reception of this, the terminal 101 stores the license in the terminal 101. By such a sequence, the contents download and the acquisition of the license are completed.

Next the user operates the terminal 101 in step 408 to issue a command for displaying a list of the downloaded contents. After receiving a list command 408, in step 409, the terminal 101 makes a determination about the license type by reading the DL control information stored in the control information storage section 408 in the terminal, to the control information determination section 409. Because the DL control information written in step 404 is the license being of the non-automatic renewal type, the determination result about the type will be the non-automatic renewal type.

Next, in step 410, the terminal 101 extracts the license, and in step 411, compares the period of the license (t1 to t2) with the current time to check. Next, using the results in steps 409, 410, and 411, the terminal makes a listing-display 412.

In this present invention, the field of a playback expiration period for the rental service of contents of the non-automatic renewal type is displayed with a different manner from a case of the contents of the automatic renewal type. Then because the contents downloaded in step 406 is known at the time of step 408 as being of the non-automatic renewal type and further the period is not yet expired, the display will be made using the period t2 as "June 15" as shown in the entry 503. By viewing such a field of a playback expiration period, the user is expected to know that the service is still available, and the user thus issues a playback command 413. As a result, the license is in the period not yet expired, and thus a playback 414 can be performed.

Thereafter, when t2 (June 15) comes with the lapse of a predetermined length of time, the license becomes automatically invalid in the server 102. At this time, information is not specifically synchronized for communications from the server 102 to the terminal 101.

Next, exemplified is a case where the user issues a list-display command 415 at an arbitrary time after June 15 in the next month or thereafter. Upon reception of the list command 415, in step 416, the terminal 101 reads the DL control information stored in the control information storage section 108 in the terminal 101, to the control information determination section 109, thereby making a license type determination. Because the DL control information written in step 404 is the license being of the non-automatic renewal type, the determination result about the type will be the non-automatic renewal type.

Next, in step 417, the terminal 101 extracts the license, and in step 418, compares the period of the license (t1 to t2) with the current time to check. Next, using the results in steps 416, 417, and 418, the terminal 101 makes a listing-display 419. In this example, the terminal 101 can know that the current time is already after t2 using the clock provided therein, and because the determination result in step 416 is the non-automatic renewal type, the terminal 101 determines that the contract is now invalid, and thus makes a display of "period expiration" as shown in the entry 504. By viewing the field of a playback expiration period as such, the user is expected to know that the period is already expired, and thus the user may not generally issue a playback command, and even if a request is made for playback, the terminal 101 does not also generally perform the playback.

As a possible modified example, of the method described above of not performing playback in response to a playback command after a display of "period expiration", such method can be realized that the playback command 420 is accepted even if the period is already expired, and when the license on the side of the server 102 is manually extended, e.g., when a user makes a new contract, a license request 421 and a license acquisition 421' may be performed.

In such a case, when the license is extended, the playback is accordingly performed, and when not extended, as shown in step 422, a display is made to show the result of not being able to perform the playback.

Moreover, as a more preferable procedure, when the playback is confirmed not to be performed, a page to purchase the contents again or to extend the period, can be requested by a re-purchase page request 423, can be obtained by a re-purchase page acquisition 423' and can be displayed to the user by a re-purchase page display 424.

The URL of such a page can be written in the DL control file in advance, for example. With such a sequence, it is possible to implement a contents rental system that issues permission to contents viewing under the conditions of the non-automatic renewal for a fixed length of period.

With such a sequence, even with a rental license of an automaticrenewal type on the basis of a month by month, for example, there is no more need to renew every content every month, but only such contents are renewed that a playback command is issued within the month to need license renewal. Thus this allows contents viewing by extending a period of viewing through correct renewal of the period in the terminal, without such troubles to generate any unnecessary load of renewal, impose an excessive load on the server and cause the concentration of load due to the license renewal at the end of the month.

Moreover, provided is an information display method of eliminating the need for a user to be always conscious of any unnecessary provisional period and renewal thereof , with regard to the contents of automatically renewal type, and of allowing intuitive understanding of the state of contents by the user.

Note here that the entry 501 of FIG. 5(a) corresponding to step 313 is displayed simply as "automatic renewal". Alternatively, using t2 (June 30) being the provisional period, as shown in an entry 505 of FIG. 5(b), a display of "automatic renewal (6/30)" may be made.

Moreover, the entry 502 of FIG. 5(a) corresponding to step 332 is displayed simply as "period expiration". Alternatively, in order to make a distinction from the state of period expiration with the non-automatic renewal, as shown in an entry 506 of FIG. 5(b), a display of "automatic renewal (invalidated)" may be made.

Note here that, in the embodiment, the terminal makes a display of "automatic renewal" when no confirmation about period expiration is made for the contents of the automaticrenewal type. Alternatively, any message will do as long as the user is notified that the operation is of the automatic renewal type, e.g., a message of "monthly" may be displayed.

Moreover, as a more preferable configuration in terms of the user's ease to understand, any arbitrary message information such as "monthly" or "three-month basis" can be distributed by the DL control information, and before a display of period expiration is made, a message display of the DL control information may be made.

Note here that, in the embodiment, the license includes a license period and an encryption key of the content, and information about the license type is exemplified as being written in the DL control information. Alternatively, these may be all written in the license.

Further, in this embodiment, even when the license of the contents of the automatic renewal type is already expired because t2 is already passed in step 315, the terminal 101 is exemplified as not making an attempt to acquire again the license unless the playback command 321 comes. As an alternative procedure, the terminal 101 may acquire the license again from the server 102, while equalizing the acquisition interval in accordance with a fixed schedule, when t2 is passed. As such, the terminal 101 may be so configured as to automatically acquire again the license.

Still further, as long as the capabilities of the server 102 allow, at an arbitrary timing after t2, the terminal 101 may be allowed to acquire a license. To reduce the load on the server 102, and to prevent the load from concentrating thereon, it is needless to say that the configuration of not acquiring a license immediately after t2 is more preferable. But, even with the configuration of making an attempt to acquire a license immediately after t2, according to the present invention, a license is acquired from the server 102 by the terminal 101 only for the contents existing in the terminal 101. As such, there are a plurality of advantages that there is no need to perform communications beyond NAT of the router from the server 102 to the terminal 101, and the load reduction is possible because no license is acquired to any contents already eliminated from the terminal 101 so that it is obvious that some effects can be acquired.

The program according to the present invention is the program for enabling the computer to perform the functions of the network AV contents playback terminal of the present invention as described above, and operated in cooperation with the computer.

Also, a recording medium according to the present invention records the program for enabling the computer to perform the functions of the network AV contents playback terminal of the present invention as described above, and is readable by the computer, whereby the read program performs the functions in cooperation with the computer.

In one use form of the program according to the present invention, the program may be recorded in the recording medium such as ROM readable by the computer, and operated in cooperation with the computer.

Also, in another use form of the program according to the present invention, the program may be transmitted across the network such as the Internet, or through the transmission media such as light, electric wave or sound wave, read by the computer and operated in cooperation with the computer.

Also, the computer according to the present invention described above is not limited to the pure hardware such as CPU, but may comprise a firmware, OS, or peripheral devices.

As described above, the configuration of the present invention may be implemented by software or hardware.

### [INDUSTRIAL UTILITY]

According to the present invention such contents rental system has been provided that video and audio contents are downloaded through a network to be permitted viewed for a limited time.

A terminal, a server, and a system having such many superior advantages, can be offered that the network contents rental system is realized, which allows the user viewing by extending a period of viewing through correct renewal of the period in the terminal, without imposing an excessive load on the server and causing the concentration of load, even with a rental license of a type automatically renewing the viewing period on the side of the server, and which realizes such information display method allowing intuitive understanding of the state of contents by the user.

## Claims

1. A network AV contents playback terminal that is connected with a server on a network, acquires AV contents through the connection, acquires a license of the AV contents from the server for its own storage, and uses the AV contents for a fixed length of time based on the stored license, the terminal is **characterized by** comprising:
an interface output that displays a time range available for viewing of the AV contents based on the stored license; and
an interface input that accepts a command from a user for playing back the AV contents, wherein
a determination is made whether the license is of an automatic renewal type where a specific range of time and day available for use is automatically renewed on the server or of a non-automatic renewal type where no such renewal is automatically made, and
in accordance with a result of the determination, the time range available for viewing is displayed with a different manner.

2. The network AV contents playback terminal according to claim 1, **characterized by** comprising:
an accumulation section, and
the AV contents are used after it is acquired and accumulated in the accumulation section.

3. The network AV contents playback terminal according to claim 2, **characterized in that**
when the result of the determination shows that the license of the AV contents is of the automatic renewal type, even if information about a period in the stored license, shows that the period is already expired, a display of period expiration is not made but a display is made to indicate that the license is of the automatic renewal type, at a point in time before the license is renewed, and
when the result of the determination shows that the license of the AV contents is of the non-automatic renewal type, the information about the period in the stored license is displayed, and when the period is already expired, a display is made to indicate that the period is already expired.

4. The network AV contents playback terminal according to claim 3, **characterized in that**
the license is renewed when the command for playing back the AV contents is provided.

5. The network AV contents playback terminal according to claim 3, **characterized in that**
when the command for playing back the AV contents is provided, the information about the period in the license is checked, and when a result of the check shows that the period is not yet expired, the AV contents are played back, and
when the result of the check shows that the period is already expired, the license of the AV contents is acquired again from the server, and when the period is not yet expired by checking the information about the period in the license acquired again, the playback is performed.

6. The network AV contents playback terminal according to claim 3, **characterized in that**
when the command for playing back the AV contents is provided, the information about the period in the license is checked, and when a result of the check shows that the period is not yet expired, the AV contents are played back, and
when the result of the check shows that the period is already expired, the license of the AV contents is acquired again from the server, and when the acquisition results in a failure or when the period is already expired by checking the information about the period in the license acquired again, an operation screen is displayed for the user to offer a purchase again.

7. The network AV contents playback terminal according to claim 3, **characterized in that**
when the command for playing back the AV contents is provided, the information about the period found in the license is checked, and when a result of the check shows that the period is not yet expired, the AV contents is played back, and
when the result of the check shows that the period is already expired, and when the license of the AV contents is of the automatic renewal type, the license of the AV contents is acquired again from the server, and when the period is not yet expired by checking the information about the period in the license acquired again, the AV contents are played back.

8. The network AV contents playback terminal according to claim 3, **characterized in that**
when the license of the AV contents is of the automatic renewal type, the information about the period in the license is automatically checked, and when a result of the check shows that the period is already expired, the license of the AV contents is acquired again from the server while equalizing an acquisition interval in accordance with a certain schedule.

9. A network AV contents distribution server that distributes an AV contents through a connection established with a terminal on a network, **characterized in that**
the server issues a license of the AV contents to the terminal,
the license is at least two types, the one being of an automatic renewal type where a specific range of time and day available for use is automatically renewed on the server and the other being of a non-automatic renewal type where no such renewal is automatically made,
prior to the distribution of the AV contents, the server transmits to the terminal, a set of control information for use to acquire the AV contents or to use thereof, and
the control information includes type information about whether the license is of the automatic renewal type or the non-automatic renewal type.

10. A network AV contents distribution server that distributes an AV contents through a connection established with a terminal on a network, **characterized in that**
the server issues a license of the AV contents to the terminal,
the license is at least two types, the one being of an automatic renewal type where a specific range of time and day available for use is automatically renewed on the server and the other being of a non-automatic renewal type where no such renewal is automatically made, and
in response to a request coming from the terminal, the server makes a response of type information about whether the license is of the automatic renewal type or the non-automatic renewal type.

11. A network AV contents distribution system in which a server is connected with a terminal having an accumulation section, via a network, and
the server distributes an AV contents to the terminal, and issues a license of the AV contents to the terminal, and the terminal stores the issued license and uses the AV contents for a fixed length of time based on the stored license, **characterized in that**
the license is at least two types, the one being of an automatic renewal type where a specific range of time and day available for use is automatically renewed on the server and the other being of a non-automatic renewal type where no such renewal is automatically made,
prior to the distribution of the AV contents, the server transmits to the terminal, a set of control information for use to acquire the AV contents or to use thereof, and
the control information includes type information about whether the license is of the automatic renewal type or the non-automatic renewal type
the terminal is provided with an interface output that displays a time range available for viewing of the AV contents to a user based on the stored license, and an interface input that is used for the user to issue a command for playing back the AV contents,
the terminal determines whether the stored license is of the automatic renewal type or the non-automatic renewal type,
when a result of the determination shows that the license of the AV contents is of the automatic renewal type, irrespective of information about a period in the stored license, a display of period expiration is not made but a display is made to indicate that the license is of the automatic renewal type, and
when the result of the determination shows that the license of the AV contents is of the non-automatic renewal type, the information about the period in the stored license is displayed, and when the period is already expired, information telling that the period is already expired is displayed.

12. A terminal program using an AV contents in a terminal that is connected with a server on a network, acquires the AV contents through the connection, acquires a license of the AV contents from the server for its own storage, and uses the AV contents for a fixed length of time based on the stored license, the program that makes a computer operate as:
an operation input instrument which accepts a command from the user for playing back the AV contents;
a control information determination instrument which makes a determination whether the license is of an automatic renewal type where a specific range of time and day available for use is automatically renewed on the server or of a non-automatic renewal type where no such renewal is automatically made; and
an information display instrument which displays with different manner to the user, a time range available for viewing of the AV contents, based on the license, in accordance with a result of the determination.

13. A recording medium recorded with the program of Claim 12, and can be processed by a computer.
